# FASCICULE DE BREVET EUROPEEN

(11) **EP 1 410 152 B1**
(45) Date de publication et mention de la délivrance du brevet: **15.11.2006**
(21) Numéro de dépôt: 02762544.1
(22) Date de dépôt: 11.07.2002
(51) Int. Cl.: G06F 21/22

(54) **SECURISATION DE LECTURE D'INSTRUCTIONS DANS UN SYSTEME DE TRAITEMENT DE DONNEES**
GESCHÜTZTE LESUNG VON RECHNERBEFEHLEN IN EINEM DATENVERARBEITUNGSSYSTEM
MAKING SECURE INSTRUCTION READING IN A DATA PROCESSING SYSTEM

(30) Priorité: 16.07.2001 FR 0109574
(43) Date de publication de la demande: 21.04.2004
(73) Titulaire: GEMPLUS, 13420 Gémenos (FR)
(72) Inventeur: GAUTERON, Laurent, F-13700 Marignane (FR); GONZALVO, Benoît, F-13600 Ceyreste (FR)
(86) Numéro de dépôt international: PCT/FR2002/002445
(87) Numéro de publication internationale: WO 2003/009110

(56) Documents cités:
- US-A- 4 683 553
- US-A- 6 038 667
- DAVIDA G I ET AL: "Defending systems against viruses through cryptographic authentication" PROCEEDINGS OF THE SYMPOSIUM ON SECURITY AND PRIVACY. OAKLAND, MAY 1 - 3, 1989, WASHINGTON, IEEE COMP. SOC. PRESS, US, 1 mai 1989 (1989-05-01), pages 312-318, XP010016032 ISBN: 0-8186-1939-2

## Description

La présente invention concerne des perfectionnements apportés à un système de traitement de données, tel qu'un ordinateur, pour sécuriser la lecture de blocs de code depuis un périphérique de stockage sous la commande du processeur du système.

Plus particulièrement l'invention vise à améliorer la sécurité de l'exécution d'une application ou d'un programme afin d'arrêter cette exécution dès qu'une instruction est réputée incorrecte. Ainsi toute application chargée dans le système ne sera pas exécutée si l'une de ses instructions a été modifiée de manière malveillante après le chargement de l'application dans le système.

L'invention vise particulièrement à remédier aux attaques externes lors du déroulement en temps réel d'une quelconque application pendant une liaison du système de traitement de données avec un réseau externe, tel que le réseau internet. Ainsi l'invention est applicable particulièrement à des systèmes de traitement de données tels que des stations de travail, des serveurs et des ordinateurs personnels qui sont reliés très souvent au réseau internet ou à des réseaux intranet.

Selon l'article intitulé "Defending Systems Against Viruses through Cryptographie Authentification", PROCEEDING OF THE SYMPOSIUM ON SECURITY AND PRIVACY, OAKLAND, MAI 1-3, 1989, WASHINGTON, IEEE COMP. SOC. PRESS, un procédé de traitement sécurisé d'application fait appel à une authentification cryptographique pour sécuriser l'installation d'un logiciel, c'est-à-dire une version de celui-ci ou des données pertinentes mises à jour, dans une machine d'usager, le logiciel étant fourni par une machine de vendeur. Chacune des deux machines comprend un authentificateur.

L'authentificateur du vendeur génère une signature pour la version de programme en fonction d'une clé privée dans la machine de vendeur et sur la base de données pertinentes (nom de programme, numéro de série, numéro de version, date de version) de la version de programme.

L'authentificateur de l'usager lit une clé publique mémorisée du vendeur, vérifie que la signature pour la version du programme du logiciel est correcte sur la base des données pertinentes, configure le programme si nécessaire et crée un programme signé globalement et par bloc (page/segment), et charge le programme signé dans la machine d'usager.

Le brevet US-A-6038667 divulgue dans un ordinateur l'interposition d'un coprocesseur de sécurité entre l'unité centrale de traitement (CPU) et le reste de l'ordinateur afin de pouvoir interrompre le fonctionnement de l'ordinateur pour vérifier des signatures numériques d'un logiciel avant qu'il soit utilisé pour la première fois ou après un certain temps.

Ces deux documents sont muets sur le traitement du logiciel signé et sur la validation du logiciel avant son exécution entre des composants de la machine d'usager ou de l'ordinateur.

L'invention remédie à ce manquement et plus particulièrement à interdire dynamiquement, c'est-à-dire en temps réel, l'exécution d'une transaction, telle qu'un paiement, depuis le système de traitement de données dès qu'une instruction ou bloc de code relatif à l'application de la transaction est détecté incorrect par rapport à l'instruction ou bloc de code de l'application initialement chargé dans le périphérique de stockage du système.

A cette fin, un procédé de traitement sécurisé d'application dans un système de traitement de données est tel que défini et caractérisé dans la revendication 1.

Grâce à la vérification d'intégrité de chaque bloc de code d'une application transféré depuis le périphérique de stockage, tel qu'un disque dur, avant d'exécuter une instruction contenue dans le bloc lu, l'invention remédie aux conséquences d'une attaque visant par exemple à effacer des données, à transmettre des données confidentielles lues dans la mémoire à un attaquant, à signer numériquement des données sélectionnées par un attaquant, à installer des virus, etc.

L'invention concerne également un système de traitement de données tel que défini et caractérisé dans la revendication 4.

Selon une première réalisation préférée, le système comprend un moyen pour signer les blocs de code en fonction des données secrètes lues dans le support d'enregistrement lors du chargement de l'application afin de pré-mémoriser des signatures respectivement en association avec les blocs de code dans le périphérique de stockage, et le deuxième support d'enregistrement est confondu avec le premier support d'enregistrement. Le support d'enregistrement est par exemple un disque CD-ROM. En variante, afin d'améliorer la sécurité, le premier support d'enregistrement supportant les blocs de code de l'application est distinct du deuxième support d'enregistrement, tel que carte à puce, inséré dans un deuxième moyen de chargement pour charger les données secrètes, telles qu'une clé d'au moins une application en relation avec un algorithme de détermination de signature qui est commun à des applications, ou un algorithme de détermination de signature et une clé associés à au moins une application respective. Les données secrètes dans le deuxième support d'enregistrement sont également lues par un troisième moyen de chargement afin qu'elles servent à déterminer les signatures des blocs de code transférés.

Selon une deuxième réalisation, le moyen pour signer les blocs de code lors du chargement de l'application est supprimé. En effet, les signatures des blocs de code sont déjà mémorisées en association avec les blocs de code d'au moins une application dans le premier support d'enregistrement afin que le premier moyen de chargement charge à la fois les blocs de code et les signatures associées directement dans le périphérique de stockage.

Selon un autre aspect de l'invention, le système peut également comprendre une mémoire cache liée au moyen de vérification d'intégrité pour mémoriser des blocs de code vérifiés afin de les transmettre directement au processeur en réponse à des commandes de lecture de ces blocs par le processeur.

L'invention concerne encore un support d'enregistrement pour le système de traitement de données conforme à l'invention, qui est caractérisé en ce qu'il supporte des blocs de code composant une application et des signatures associées respectivement aux blocs de code.

D'autres caractéristiques et avantages de la présente invention.apparaîtront plus clairement à la lecture de la description suivante de plusieurs réalisations préférées de l'invention en référence aux dessins annexés correspondants dans lesquels :
- la figure 1 est un bloc-diagramme schématique d'un système de traitement de données du type ordinateur personnel avec un module de vérification d'intégrité de bloc de code selon une première réalisation de l'invention ;
- la figure 2 est un algorithme de vérification d'intégrité de bloc de code selon l'invention ; et
- la figure 3 est une vue en perspective schématique montrant un module à contrôleur de vérification d'intégrité de bloc de code selon l'invention interposé entre un bloc de processeur ou de mémoire principale et une carte mère du système de traitement de données.

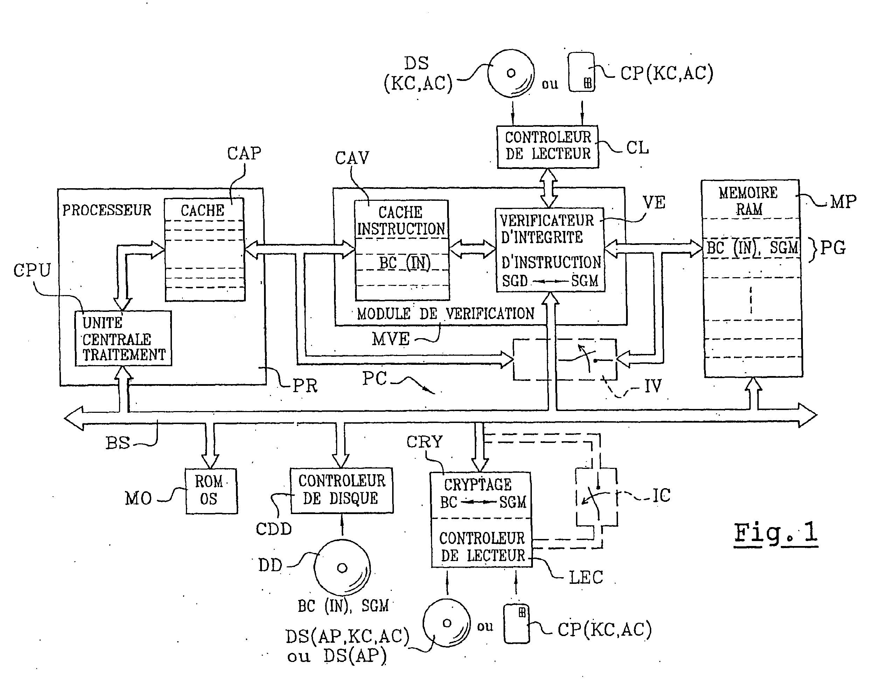

Selon la réalisation de l'invention illustrée à la figure 1, un système de traitement de données est un ordinateur personnel PC organisé autour d'un processeur PR montré schématiquement avec son unité centrale de traitement CPU et une mémoire cache CAP. En variante, la mémoire cache est un module externe au processeur PR.

La figure 1 montre différentes unités fonctionnelles incluses dans l'ordinateur PC et en relation avec l'invention. On retrouve classiquement, connectées à un bus de système BS qui fait également office de bus d'entrée/sortie, une mémoire MO de type ROM contenant le système d'exploitation OS de l'ordinateur ainsi que des applications spécifiques, une mémoire principale non volatile MP de type SRAM ou bien EEPROM pour contenir à la fois des instructions et des données traitées par le processeur PR, et un périphérique de stockage permanent comportant un support d'enregistrement tel qu'un disque dur DD avec le contrôleur CDD de celui-ci. La mémoire MP comme la mémoire cache CAP sont divisées en un espace de données et un espace d'instructions et les espaces sont organisés en pages de quelques koctets. Selon la technique antérieure, il est rappelé que les mémoires CAP et MP sont reliées directement afin que l'unité centrale CPU lise des instructions temporaires d'une application transférées depuis le disque dur DD vers l'espace d'instructions de la mémoire principale MP et commande des transferts, lectures et écritures de données entre le disque dur DD et les mémoires MP et CAP lors du déroulement d'une application chargée initialement dans le disque dur DD.

Selon l'invention, un module de vérification d'intégrité de bloc de code MVE est interconnecté dans la liaison entre les espaces d'instructions dans les mémoires CAP et MP et est transparent aux données échangées entre les espaces de données dans les mémoires CAP et MP.

Le module de vérification MVE constitue un moyen pour vérifier dynamiquement l'intégrité de chaque bloc de code qui a été transféré dans l'espace d'instructions de la mémoire principale MP et qui doit être lu dans celui-ci sous la commande de l'unité centrale CPU dans le processeur PR. L'espace d'instructions de la mémoire principale MP est organisé en pages de code ayant une taille prédéterminée de quelques koctets. Chaque page contient des lignes chacune sous la forme d'un bloc de code comportant une ou plusieurs instructions et formée par quelques octets, par exemple au plus 16 ou 32 octets. Les instructions sont transférés bloc par bloc vers le processeur PR à travers le module MVE.

Les blocs de code sont des instructions qui sont chargées dans le disque dur DD à travers un périphérique relié au bus de système BS. Par exemple, le périphérique comporte le contrôleur d'entrée/sortie LEC d'un lecteur de disque qui lit de manière classique un support d'enregistrement souple amovible tel qu'un disque DS de type CD-ROM, pour charger au moins une application prédéterminée AP dans le disque dur DD.

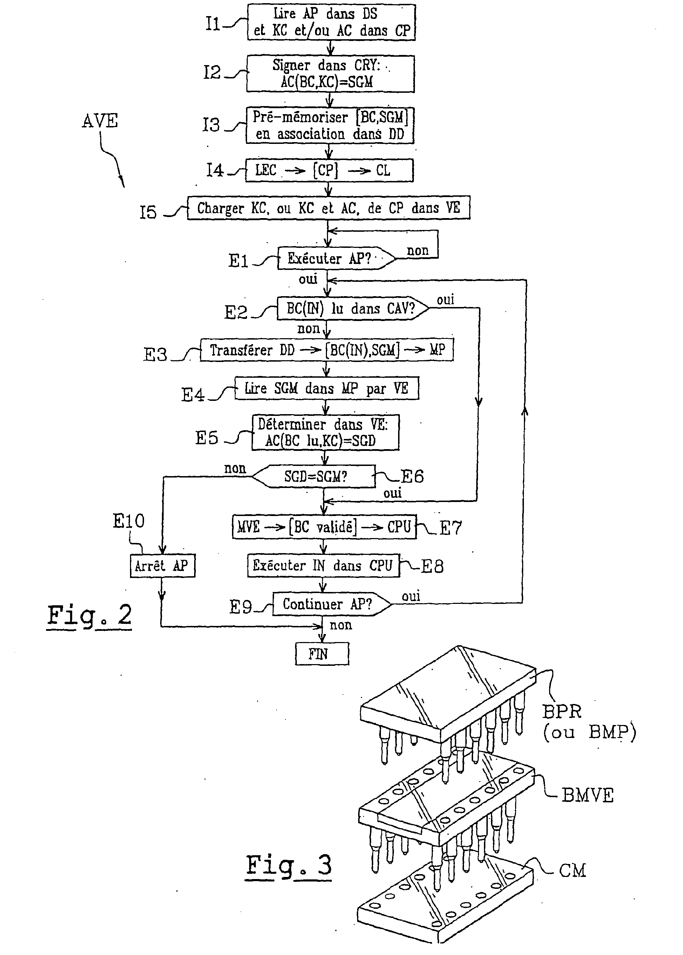

Le module de vérification d'intégrité d'instruction MVE selon l'invention comprend un vérificateur VE qui est associé à un contrôleur de lecture CL et qui est constitué par un microcontrôleur pour vérifier l'intégrité des instructions lues en temps réel dans l'espace d'instruction de la mémoire principale MP selon l'algorithme de vérification d'intégrité AVE montré à la figure 2. Optionnellement, le module de vérification MVE comprend une mémoire cache d'instructions CAV qui mémorise des zones vérifiées de l'espace d'instructions de la mémoire principale MP autour d'instructions considérées les plus utilisées en temps réel afin de réduire le temps de lecture des instructions.

L'algorithme de vérification d'intégrité repose sur un cryptage des instructions contenues dans la mémoire MP afin de déterminer des signatures des instructions. Les instructions ou plus précisément les blocs de code relatifs à une même application sont signés lors du chargement de l'application dans le disque dur DD, puis en temps réel lors du déroulement de l'application selon un algorithme de cryptage commun prédéterminé AC pour déterminer des signatures de bloc de préférence en dépendance d'une clé respective d'application KC pour la vérification d'intégrité, bien que les blocs de code soient écrits initialement en clair dans le disque dur DD et transférés sans modification depuis le disque dur vers la mémoire MP. Ainsi, des blocs de code contenus dans le disque dur DD et appartenant à des applications différentes sont signés respectivement en dépendance de clés différentes KC. Selon une autre variante, des blocs de code contenus dans le disque dur DD et appartenant à des applications différentes sont signés respectivement selon des algorithmes de détermination de signature différents AC qui, de préférence, font appel à des clés respectives différentes KC.

Selon une première réalisation qui est illustrée à la figure 1, le contrôleur de lecteur LEC est lié à un dispositif de cryptage CRY pour signer les blocs de code BC d'une application déterminée AP lus dans un disque souple DS introduit dans le lecteur, lors du chargement de l'application AP dans le disque dur DD afin d'écrire et de pré-mémoriser des signatures de bloc SGM respectivement en association avec les blocs de code BC en clair de l'application AP dans le disque dur DD sous la commande du contrôleur de disque CDD. Le support d'enregistrement de l'application prédéterminée AP, telle que le disque DS de type CD-ROM, contient la clé respective KC qui est communiquée au dispositif de cryptage CRY mettant en oeuvre l'algorithme de détermination de clé commun à toutes les applications selon la première variante précédente. Selon la deuxième variante, le disque DS contient l'algorithme de détermination de clé respectif AC et le cas échéant la clé respective KC qui sont communiqués au dispositif CRY. Après l'installation de l'application AP au cour de laquelle le contrôleur LEC et le dispositif CRY transfèrent les blocs de code BC de l'application AP en clair et les signatures associées SGM dans le disque dur DD, la clé KC, ou l'algorithme de détermination de signature AC avec le cas échéant la clé KC sont également communiqués au vérificateur VE par le contrôleur de lecteur CL à la suite d'un retrait du disque souple DS du lecteur relatif au contrôleur LEC, puis d'une insertion du disque souple DS dans le lecteur relatif au contrôleur CL et d'une lecture partielle du disque DS par le contrôleur CL.

De cette manière, les données secrètes constituées par la clé KC, ou celle-ci et l'algorithme AC ne transitent pas à l'intérieur de l'ordinateur PC, via le bus de système interne BS, ce qui remédie à toute attaque puisque le processeur PR ignore les données secrètes même pour ordonner le déroulement de l'application.

En variante, pour améliorer encore la sécurité, le support d'enregistrement DS, de type CD-ROM, ayant enregistré une application AP est distinct d'un deuxième support d'enregistrement ayant enregistré des données secrètes participant à la détermination des signatures des instructions de l'application AP, ces données secrètes étant la clé respective KC, ou l'algorithme de détermination de signature respectif AC avec une éventuelle clé KC. En conséquence, le premier moyen de chargement constitué par le contrôleur LEC et des disques CD-ROM DS pour charger des applications en clair sous forme de blocs de code dans le disque dur DD est distinct d'un deuxième moyen pour charger des clés KC et/ou des algorithmes AC avec d'éventuelles clés respectives dans le dispositif de cryptage CRY. Selon la réalisation illustrée à la figure 1, le deuxième moyen de chargement comprend le contrôleur LEC qui contrôle le lecteur du deuxième support d'enregistrement, tel qu'une carte à puce pour y lire une clé KC, ou un algorithme de détermination de signature AC avec une éventuelle clé KC. La distinction entre les supports d'enregistrement DS pour les applications et les supports d'enregistrement CP pour les données secrètes permet à chaque usager ou à chaque développeur d'application d'associer à chaque application AP des données secrètes respectives KC, ou AC et KC, choisies parmi un lot de supports d'enregistrement CP.

Pour cette variante, le contrôleur de lecteur CL dans le module MVE est relatif à un lecteur du deuxième support d'enregistrement, tel que carte à puce CP, pour y lire et communiquer au vérificateur VE la clé respective KC, ou celle-ci et l'algorithme respectif AC.

A titre d'exemple, un algorithme de détermination de signature AC opère un hâchage à sens unique sur une chaîne de code prédéterminée formée par un bloc de code. En général, la signature, dite également empreinte, d'un bloc de code crypté a une taille très inférieure au bloc de code. La fonction de hâchage à sens unique dépend en variante d'une clé secrète respective KC lue dans le disque DS, ou de préférence dans la carte à puce respective CP afin qu'une signature ou un Code d'Authentification de Messages CAM de chaque bloc de code soit fourni par le dispositif de cryptage CRY et pré-mémorisé dans le disque dur DD lors de l'installation de l'application, puis soit comparé à une signature respective déterminée en temps réel par le vérificateur VER lors de la lecture du bloc pendant l'exécution de l'application, comme on le verra ci-après.

Selon une deuxième réalisation, les signatures "pré-mémorisées" SGM des blocs de code BC d'une application déterminée AP ne sont pas déterminées par le dispositif de cryptage CRY qui est alors supprimé.

Le support d'enregistrement constitué par le disque souple DS supporte également des signatures SGM des blocs de code BC en clair d'au moins une application AP qui ont été élaborées à l'extérieur de l'ordinateur PC et qui sont respectivement associées aux blocs de code. Le contrôleur de lecteur LEC charge les blocs de code BC et les signatures SGM respectivement associés depuis le disque souple DS dans le disque dur DD à travers le contrôleur CDD. Les données secrètes, telles que clé KC ou clé KC et algorithme AC, liées à l'application AC sont également supportées par le disque souple DS afin que le deuxième contrôleur de lecteur CL charge les données secrètes lues dans le disque DS dans le vérificateur VE qui pourra déterminer des signatures SGD relatives à des blocs de code transférés dans la mémoire principale MP lors du déroulement ultérieur de l'application AP.

Comme pour la variante de la première réalisation, une variante de la seconde réalisation consiste à ce que les données KC, ou KC et AC, soient supportées dans un deuxième support d'enregistrement, tel que la carte à puce CP, distinct du disque DS et chargées seulement par le contrôleur de lecteur CL dans le vérificateur VE en vue de déterminer ultérieurement les signatures des blocs transférés.

L'algorithme de vérification d'intégrité d'instruction AVE montré à la figure 2 débute par des étapes initiales I1 à I5 relatives à l'installation d'une application AP dans le système de traitement de données constitué par l'ordinateur personnel PC. On se référera dans la suite à la première réalisation et à des supports d'enregistrement distincts DS et CP pour l'application et les données secrètes KC, ou KC et AC, associées à celle-ci et comportant au moins une clé KC.

Après introduction du disque souple DS de type CD-ROM et de la carte à puce CP, dite également carte à microcontrôleur ou carte à circuit intégré, respectivement dans le lecteur LEC faisant office de premier et deuxième moyens de chargement, les blocs de code de l'application AP sont écrits dans le disque dur DD, et la clé respective KC et/ou l'algorithme de détermination de signature AC extraits de la carte CP sont transmis par le lecteur LEC au dispositif de cryptage CRY, à l'étape I1. Au cours du chargement bloc par bloc de l'application AP depuis le disque souple DS vers le disque dur DD, les blocs de code BC sont successivement signés bloc par bloc selon la clé KC et/ou l'algorithme AC dans le dispositif CRY à l'étape 12. Le dispositif CRY produit des signatures respectives SGM des blocs de code qui sont pré-mémorisées dans le disque dur DD en association respectivement avec les blocs de code écrits en clair dans le disque dur DD, à l'étape I3.

Après l'installation des blocs de code de l'application avec les signatures associées dans le disque dur, la carte à puce CP est retirée à l'étape I4 du lecteur relatif au contrôleur LEC pour l'insérer dans le lecteur relatif au contrôleur CL associé au module de vérification MVE. Le contrôleur CL charge ensuite à l'étape I5 les données secrètes KC, ou KC et AC, depuis la carte à puce CP dans le vérificateur VE.

Selon la première réalisation pour laquelle les données secrètes sont mémorisées dans le disque souple DS, celui-ci est inséré dans le lecteur du contrôleur CL à l'étape 14, afin de charger les données secrètes lues dans le disque DS, dans le vérificateur VE à l'étape I5.

Pour exécuter l'application à une étape E1, et plus précisément pour exécuter une instruction de l'application AP correspondant à un bloc de code stocké dans le disque dur DD, l'algorithme de vérification d'intégrité AVE comprend des étapes E2 à E9.

Avant d'appeler une instruction déterminée IN dans le disque dur DD pour l'écrire dans l'espace d'instruction de la.mémoire principale MP, l'unité centrale de traitement CPU du processeur PR s'assure classiquement que l'instruction n'est pas déjà disponible dans sa propre mémoire cache CAP en interrogeant l'unité de gestion de celle-ci. Sinon, l'unité centrale CPU transmet des commande et adresse de lecture au contrôleur CDD du disque dur DD et au contrôleur inclus dans la mémoire MP qui pilote les processus d'écriture et de lecture dans celle-ci. Les commande et adresse de lecture sont également appliquées à l'unité de gestion du cache CAV via le vérificateur VE à travers le bus BS, afin également que le vérificateur VE soit mis en état d'attente du bloc de code éventuellement transféré à lire dans la mémoire MP et contenant l'instruction IN et pointé par l'unité CPU. Si à l'étape E2, le vérificateur VE constate que l'instruction IN recherchée par l'unité CPU est contenue dans la mémoire cache CAV, l'algorithme AVE passe ensuite directement de l'étape E2 à l'étape E7 afin que le vérificateur VE lise le bloc de code BC contenant l'instruction IN dans la mémoire CAV et le transmette à la mémoire cache CAP et au processeur PR.

En revanche, si à l'étape E2 le vérificateur VE constate que l'instruction déterminée IN appelée par l'unité centrale CPU n'est pas contenue dans la mémoire cache CAV, le vérificateur VE valide le transfert du bloc de code BC contenant l'instruction IN et pointé par l'unité centrale CPU et la signature pré-mémorisée SGM associée au bloc de code BC, depuis le disque dur DD dans la mémoire principale MP à l'étape E3. Puis à l'étape E4, le vérificateur VE lit le bloc de code BC et la signature pré-mémorisée SGM associée à celui-ci, transférés dans la mémoire principale MP afin de vérifier l'intégrité du bloc de code écrit dans la mémoire MP. En fonction de l'appartenance du bloc de code à une application déterminée AP, le vérificateur VE détermine à l'étape E5 une signature SGD du bloc de code lu BC selon l'algorithme de cryptage commun et la clé de cryptage respective KC, ou en variante selon l'algorithme de cryptage respectif AC et la clé de cryptage éventuelle respective KC, acquis lors du chargement des données secrètes à l'étape initiale I5. A l'étape E6, la signature déterminée SGD = AC(BC, KC) est comparée à la signature pré-mémorisée SGM déterminée préalablement à l'étape initiale 12 pour le bloc de code BC et lue également à l'étape E4.

Si la signature pré-mémorisée SGM est différente de la signature SGD qui vient d'être déterminée, l'exécution de l'application AP est immédiatement arrêtée à l'étape E10, ce qui est signalé par exemple par un message d'erreur par le contrôleur de visualisation de l'ordinateur PC. Ceci signifie que le bloc de code dont le défaut d'intégrité vient d'être détecté, a été modifié depuis le chargement de l'application à l'étape 13, par exemple lors d'une attaque pendant une connexion de l'ordinateur PC avec le réseau internet.

Lorsque les signatures SGD et SGM comparées sont identiques à l'étape E6, le vérificateur VE transmet le bloc de code BC contenant l'instruction déterminée IN à la mémoire cache CAV et à l'unité centrale CPU à l'étape E7 afin que, de manière connue, l'instruction IN soit décodée et exécutée et le cas échéant le résultat de celle-ci soit écrit dans la mémoire principale MP selon un traitement d'instruction pipeliné, à l'étape E8. Puis l'application AP est poursuivie à l'étape E9 en appelant l'instruction suivante notamment dans la mémoire CAV à l'étape E2 ou dans le disque dur DD à l'étape E3.

En variante, pendant des périodes de repos entre des lectures successives, le vérificateur VE commande la lecture de blocs de code supplémentaires avec leurs signatures associées qui sont de préférence voisins de blocs de code récemment lus dans le disque dur DD afin de les transférer dans la mémoire principale MP. L'intégrité des blocs supplémentaires est immédiatement vérifiée par le vérificateur VER qui les écrit dans la mémoire cache CAV. La mémorisation de blocs de code supplémentaires de l'application AP dans la mémoire cache CAV du module de vérification MVE, préalablement à tout appel en lecture de ces blocs avec leurs signatures associées par le processeur PR, permet de réduire les temps d'accès à des instructions fréquemment utilisées de l'application AP.

Selon une autre variante plus simple, la mémoire cache CAV du module MVE est supprimée, c'est-à-dire est confondue avec la mémoire cache CAP du processeur PR.

S'agissant de la deuxième réalisation pour laquelle les signatures SGM sont pré-mémorisées dans le disque souple DS en association avec les blocs de code BC d'une application AP, la deuxième étape initiale I2 dans la figure 2 est supprimée en accord avec la suppression du dispositif de cryptage CRY.

Afin d'utiliser l'ordinateur PC normalement avec des applications à charger qui ne sont pas protégées par des signatures de bloc de code selon l'invention, au moins un interrupteur IV est prévu pour mettre hors service le module de vérification VE afin de relier directement la mémoire principale MP au processeur PR. En outre, pour la première réalisation, un deuxième interrupteur IC synchrone avec le premier interrupteur IV peut mettre hors service le dispositif de cryptage CRY afin de relier directement le contrôleur de lecteur LEC au bus de système BS.

A titre d'exemple, la figure 3 montre une réalisation préférée d'implantation du module de vérification MV sous la forme d'un circuit intégré spécifique ASIC (Application Integrated Circuit) contenu dans un boîtier BMVE ayant des dimensions analogues à un boîtier BPR contenant le circuit intégré constituant le processeur PR. Le boîtier BMVE est interposé entre le boîtier de processeur BPR et l'emplacement initial de celui-ci sur la carte mère à circuit imprimé CM de l'ordinateur PC par enfichage du boîtier BPR dans le boîtier sous-jacent BMVE dont les broches sont soudées à la carte mère ME.

Selon une autre réalisation, le boîtier du module de vérification BMVE est interposé entre la carte mère CM et le boîtier de circuit intégré BMP contenant la mémoire principale MP.

Selon d'autres réalisations matérielles, le module de vérification MVE selon l'invention est intégré dans un circuit intégré contenant le processeur PR, ou bien contenant la mémoire principale MP.

Bien que l'invention ait été décrite dans le cadre d'un ordinateur personnel PC, l'invention est applicable à toute plate-forme matérielle d'un système de traitement électronique de données et particulièrement à tout type de microcontrôleur. Par exemple, le module de vérification peut être introduit entre le processeur et la mémoire non volatile EEPROM du microcontrôleur d'une carte à puce, dite carte à microcontrôleur ou carte à circuit intégré. Dans cet exemple, le processeur PR, le module MVE et les mémoires MP et MO sont des éléments contenus dans le microcontrôleur de la carte à puce qui sont reliés à travers un lecteur de carte au bus d'entrée/sortie du contrôleur d'un terminal d'accueil de carte à puce, tel qu'un terminal bancaire, un terminal point de vente ou un ordinateur personnel, à partir duquel des applications ou des portions d'application sont transmises à la carte à puce pour être chargées dans la mémoire EEPROM et parfois partiellement dans la mémoire ROM de la carte à puce.

## Revendications

1. Procédé de traitement sécurisé d'application dans un système de traitement de données (PC) du type ordinateur ou microcontrôleur comprenant un processeur (PR), une mémoire principale (MP), un moyen de vérification d'intégrité de bloc de code (MVE), et un périphérique de stockage (DD) qui pré-mémorise des blocs de code (BC) composant une application, en vue de leur exécution, comportant les étapes suivantes :
- charger (I1) des blocs de code (BC) de l'application (AP) depuis un premier support d'enregistrement (DS) dans le périphérique de stockage (DD),
- pré-mémoriser (I3) des signatures (SGM) respectivement en association avec les blocs de code chargés (BC) dans le périphérique de stockage (DD, DS),
- charger (I5) des données secrètes (KC ou AP) lues dans un deuxième support d'enregistrement (DS, CP), et
- préalablement à l'exécution d'une instruction de l'application correspondant à chaque bloc de code dans le processeur (PR) :
- transférer (E3) le bloc de code (BC) et la signature pré-mémorisée associée (SGM) du périphérique de stockage (DD, DS) à la mémoire principale (MP) en réponse à une commande de lecture du bloc de code par le processeur (PR),
- déterminer (E45) une signature (SGD) du bloc de code lu dans la mémoire principale (MP) en fonction des données secrètes chargées (KC ou AC),
- comparer (E6) la signature déterminée (SGD) et la signature pré-mémorisée respective (SGM) du bloc de code (BC) lue dans la mémoire principal (MP) et
- ne transmettre (E7) au processeur (PR) le bloc de code pour exécution (E8) de celui-ci que pour une égalité des signatures comparées (SGD, SGM),
**caractérisé en ce que** :
- Le moyen de vérification d'intégrité de bloc de code (MVE) est interconnecté entre la mémoire principale (MP) et le processeur (PR);
- Les étapes de transfert (E3), détermination de signatures (E5) comparaison de signatures (E6) et de transmission (E7) sont effectuées par le moyen de vérification d'intégrité de bloc de code (MVE).

2. Procédé conforme à la revendication 1, **caractérisé en ce qu'**il comporte les étapes initiales suivantes :
- signer (I2) chaque bloc de code par une signature (SGM) en fonction des données secrètes (KC ou AC) lues dans l'un des premier et deuxième supports d'enregistrement (DS, CP) au cours d'un chargement (I3) du bloc de code (BC) depuis le premier support d'enregistrement (DS) dans le périphérique de stockage (DD), et
- associer (I3) chaque signature pré-mémorisée (SGM) au bloc de code respectif (BC) dans le périphérique de stockage.

3. Procédé conforme la revendication 1, **caractérisé en ce qu'**il comporte les étapes initiales suivantes :
- élaborer à l'extérieur du système (PC) une signature (SGM) de chaque bloc de code (BC) et lui associer le bloc de code afin de les pré-mémoriser dans le premier support d'enregistrement (DS) qui est amovible du système, et
- charger (I3) les blocs de code et les signatures respectivement associés depuis le premier support d'enregistrement (DS), dans le périphérique de stockage (DD).

4. Système de traitement de données (PC) du type ordinateur ou microcontrôleur comprenant un processeur (PR), une mémoire principale (MP), et un périphérique de stockage (DD) qui pré-mémorise des blocs de code composant une application, en vue de leur exécution,
**caractérisé en ce qu'**il comprend
un premier moyen de chargement (DS, LEC) pour charger des blocs de code (BC) de l'application (AP) depuis un premier support d'enregistrement (DS) dans le périphérique de stockage (DD) afin de pré-mémoriser des signatures (SGM) respectivement en association avec les blocs de code (BC) dans le périphérique de stockage (DD),
un moyen de vérification d'intégrité de bloc de code (MVE) et
un deuxième moyen de chargement (DS, LEC) pour charger dans le moyen de vérification (MVE) des données secrètes (KC ou AP) lues dans un deuxième support d'enregistrement (CP), **caractérisé en ce que**
ledit moyen de vérification d'intégrité de bloc de code (MVE) est interconnecté entre la mémoire principale (MP) et le processeur (PR), et est apte à :
- déterminer une signature (SGD) de chaque bloc de code (BC) transféré depuis le périphérique de stockage (DD, DS) dans la mémoire principale (MP) et lu dans la mémoire principale (MP) en fonction des données secrètes chargées (KC ou AC), en réponse à une commande de lecture du bloc de code par le processeur (PR),
- comparer la signature déterminée à la signature respective (SGM) du bloc de code (BC) pré-mémorisée avec celui-ci dans le périphérique de stockage et transférée avec celui-ci dans la mémoire principale (MP), et
- ne transmettre ledit bloc de code au processeur (PR) pour exécution du bloc de code dans le processeur (PR) que pour une égalité des signatures comparées (SGD, SGM)

5. Système conforme à la revendication 4, selon lequel des blocs de code (BC) appartenant à des applications différentes (AP) sont signés respectivement en dépendance de clés différentes (KC).

6. Système conforme à la revendication 4 ou 5, selon lequel des blocs de code (BC) appartenant à des applications différentes (AP) sont signés respectivement selon des algorithmes de détermination de signature différents (AC).

7. Système conforme à l'une quelconque des revendications 4 à 6, comprenant un moyen (CRY) pour signer les blocs de code (BC) en fonction des données secrètes (KC ou AC) lues dans le premier support d'enregistrement (DS) lors du chargement de l'application (AP) afin de pré-mémoriser des signatures (SGM) respectivement en association avec les blocs de code (BC) dans le périphérique de stockage (DD), et le deuxième support d'enregistrement (CP) confondu avec le premier support d'enregistrement (DS) .

8. Système conforme à l'une quelconque des revendications 4 à 6, comprenant troisième moyen de chargement (CP, LEC) pour charger des données secrètes (KC ou AP) depuis un troisième support d'enregistrement (CP), et un moyen (CRY) pour signer les blocs de code (BC) en fonction de données secrètes (KC ou AC) lues dans le troisième support d'enregistrement (CP) lors du chargement de l'application (AP) afin de pré-mémoriser des signatures (SGM) respectivement en association avec les blocs de code (BC) dans le périphérique de stockage (DD).

9. Système conforme à l'une quelconque des revendications 4 à 6, dans lequel le premier moyen de chargement (DS, LEC) charge les blocs de code (BC) et les signatures respectivement associées aux blocs de code depuis le premier support d'enregistrement (DS) afin de pré-mémoriser des signatures (SGM) respectivement en association avec les blocs de code (BC) dans le périphérique de stockage (DD), et le deuxième support d'enregistrement (CP) est confondu avec le premier support d'enregistrement (DS).

10. Système conforme à la revendication 8 dans lequel le deuxième support d'enregistrement est une carte à puce (CP) ayant mémorisé en tant que données secrètes, une clé (KC) et/ou un algorithme de détermination de signature (AC) au moins de l'application (AP).

11. Système conforme à l'une quelconque des revendications 4 à 10, comprenant une mémoire cache (CAV) liée au moyen de vérification d'intégrité (MVE) pour mémoriser des blocs de code vérifiés (BC) afin de les transmettre directement au processeur (PR) en réponse à des commandes de lecture de ces blocs par le processeur.

12. Système conforme à l'une quelconque des revendications 4 à 11, dans lequel le moyen de vérification d'intégrité (MVE) comprend un module à contrôleur (VE).

13. Système conforme à la revendication 124, dans lequel le module à contrôleur (VE) du moyen de vérification d'intégrité (MVE) est sous la forme d'un boîtier à circuit intégré (BMVE) qui est interposé entre un circuit imprimé (CM) et un boîtier de circuit intégré (BPR, BMP) contenant le processeur (PR) ou la mémoire principale (MP).

14. Système conforme à la revendication 13, dans lequel le module à contrôleur (VE) du moyen de vérification d'intégrité (MVE) est intégré dans un circuit intégré contenant le processeur (PR) ou la mémoire principale (MP).

15. Support d'enregistrement (DS) pour le système de traitement de données (PC) conforme à la revendication 9, **caractérisé en ce qu'**il supporte des blocs de code (BC) composant une application (AP) et des signatures (SGM) associées respectivement aux blocs de code.

## Claims

1. Secure method of processing an application in a data processing system (PC) such as a computer or a microcontroller comprising a processor (PR), a main memory (MP), means for verifying the integrity of the block of code (MVE) and a storage peripheral (DD) which pre-memorises blocks of code (BC) that make up an application, with a view to running them, comprising the following steps:
- loading (I1) the blocks of code (BC) of the application (AP) from a first recording medium (DS) to the storage peripheral (DD),
- pre-memorising (I3) signatures (SGM) respectively associated with the blocks of code (BC) loaded in the storage peripheral (DD, DS),
- loading (I5) secret data (KC or AP) read from a second recording medium (DS, CP), and
- before running an instruction of the application corresponding to each block of code in the processor (PR):
- to transfer (E3) the block of code (BC) and the associated pre-memorised signature (SGM) from the storage peripheral (DD, DS) to the main memory (MP) in response to a command to read the block of code from the processor (PR),
- to determine (E5) a signature (SGD) of the block of code (BC) read in the main memory (MP) according to the loaded secret data (KC or AC),
- to compare (E6) the determined signature (SGD) and the respective pre-memorised signature (SGM) of the block of code (BC) read in the main memory (MP), and
- not to transmit (E7) the block of code to the processor (PR) in order to run (E8) such code unless the compared signatures (SGD, SGM) match,
**characterised in that**:
- the means for verifying the integrity of the block of code (MVE) are interconnected between the main memory (MP) and the processor (PR);
- the steps of transfer (E3), determination of signatures (E5), comparison of signatures (E6) and transmission (E7) are carried out by the means for verifying the integrity of the block of code (MVE).

2. Method according to claim 1, **characterised in that** it comprises the following initial steps:
- signing (I2) each block of code with a signature (SGM) according to secret data (KC or AC) read from either one of the first or second recording media (DS, CP) while loading (I3) the block of code (BC) from the first recording medium (DS) in the storage peripheral (DD), and
- associating (I3) each pre-memorised signature (SGM) with the respective block of code (BC) in the storage peripheral.

3. Method according to claim 1, **characterised in that** it comprises the following initial steps:
- creating a signature (SGM) for each block of code (BC) outside the system (PC) and associating it with the block of code in order to pre-memorise them in the first recording medium (DS) which can be removed from the system, and
- loading (I3) the blocks of code and the respectively associated signatures from the first recording medium (DS) to the storage peripheral (DD).

4. Data processing system (PC) such as a computer or a microcontroller comprising a processor (PR), a main memory (MP) and a storage peripheral (DD) which pre-memorises blocks of code (BC) that make up an application, with a view to running them, **characterised in that** it comprises
first loading means (DS, LEC) for loading blocks of code (BC) of the application (AP) from a first recording medium (DS) to the storage peripheral (DD) in order to pre-memorise the signatures (SGM) respectively associated with the blocks of code (BC) in the storage peripheral (DD),
means for verifying the integrity of the block of code (MVE), and
second loading means (DS, LEC) for loading secret data (KC or AC) read from a second recording medium (CP) in the verification means (MVE),
**characterised in that** said means for verifying the integrity of the block of code (MVE) are interconnected between the main memory (MP) and the processor (PR), and are capable of:
- determining a signature (SGD) of each block of code (BC) transferred from the storage peripheral (DD, DS) to the main memory (MP) and read in the main memory (MP), according to the loaded secret data (KC or AC), in response to a command to read the block of code from the processor (PR),
- comparing the determined signature with the respective signature (SGM) of the pre-memorised block of code (BC) with the signature in the storage peripheral and transferred with it to the main memory (MP), and
- not transmitting said block of code to the processor (PR) in order to run the block of code in the processor (PR) unless the compared signatures (SGD, SGM) match.

5. System according to claim 4, according to which blocks of code (BC) belonging to different applications (AP) are signed respectively using different keys (KC).

6. System according to claim 4 or 5, according to which blocks of code (BC) belonging to different applications (AP) are signed respectively according to different signature determination algorithms (AC).

7. System according to any one of the claims from 4 to 6, comprising means (CRY) for signing the blocks of code (BC) according to secret data (KC or AC) read in the first recording medium (DS) when loading the application (AP) in order to pre-memorise signatures (SGM) respectively associated with the blocks of code (BC) in the storage peripheral (DD), and the second recording medium (CP) is merged with the first recording medium (DS).

8. System according to any one of the claims from 4 to 6, comprising third loading means (CP, LEC) for loading secret data (KC or AP) from a third recording medium (CP), and means (CRY) for signing the blocks of code (BC) according to the secret data (KC or AC) read in the third recording medium (CP) when loading the application (AP) in order to pre-memorise the signatures (SGM) respectively associated with the blocks of code (BC) in the storage peripheral (DD).

9. System according to any one of the claims from 4 to 6, in which the first loading means (DS, LEC) load the blocks of code (BC) and the signatures respectively associated with the blocks of code from the first recording medium (DS) in order to pre-memorise signatures (SGM) respectively associated with the blocks of code (BC) in the storage peripheral (DD), and the second recording medium (CP) is merged with the first recording medium (DS).

10. System according to claim 8, in which the second recording medium is a chip card (CP) having memorised, by way of secret data, a key (KC) and/or an algorithm for determining the signature (AC) at least of the application (AP).

11. System according to any one of the claims from 4 to 10, comprising a cache memory (CAV) linked to the means for verifying the integrity (MVE) in order to memorise verified blocks of code (BC) with a view to transmitting them directly to the processor (PR) in response to the commands to read these blocks from the processor.

12. System according to any one of the claims from 4 to 11, in which the means for verifying the integrity (MVE) comprise a controller module (VE).

13. System according to claim 12, in which the controller module (VE) of the means for verifying the integrity (MVE) is in the form of an integrated-circuit case (BMVE) that is placed between a printed circuit (CM) and a integrated-circuit case (BPR, BMP) containing the processor (PR) or the main memory (MP).

14. System according to claim 13, in which the controller module (VE) of the means for verifying the integrity (MVE) is built into an integrated circuit containing the processor (PR) or the main memory (MP).

15. Recording medium (DS) for the data processing system (PC) according to claim 9, **characterised in that** it supports blocks of code (BC) that make up an application (AP) and signatures associated respectively with the blocks of code.

## Patentansprüche

1. Gesichertes Anwendungs-VerarbeitungsVerfahren in einem Datenverarbeitungssystem (PC) vom Typ Computer oder Mikrocontroller mit einem Prozessor (PR), einem Hauptspeicher (MP), einem Überprüfungsmittel der Integrität des Codeblocks (MVE) und einem Speicher-Peripherie-Gerät (DD), das eine Anwendung bildende Codeblöcke (BC) zwecks ihrer Ausführung vorspeichert, mit den folgenden Stufen:
- Laden (11) der Codeblöcke (BC) der Anwendung (AP) ab einem ersten Speicherträger (DS) in das Speicher-Peripherie-Gerät (DD),
- Vorspeichern (I3) der Unterschriften (SGM) jeweils in Verbindung mit den in das Speicher-Peripherie-Gerät (DD) geladenen Codeblöcken (BC),
- Laden (15) von in einen zweiten Speicher-Träger (DS, CP) gelesenen geheimen Daten (KC oder AP) und
- vor der Ausführung einer Anweisung der jedem Codeblock im Prozessor (PR) entsprechenden Anwendung:
- Übertragen (E3) des Codeblocks (BC) und der vorgespeicherten zugeordneten Unterschrift (SGM) des Speicher-Peripherie-Geräts (DD, DS) auf den Hauptspeicher (MP) als Antwort auf einen Lesebefehl des Codeblocks durch den Prozessor (PR),
- Bestimmung (E5) einer Unterschrift (SGD) des im Hauptspeicher (MP) gelesenen Codeblocks in Abhängigkeit von den geladenen geheimen Daten (KC oder AC),
- Vergleich (E6) der bestimmten Unterschrift (SGD) und der jeweiligen im Hauptspeicher (MP) gelesenen vorgespeicherten Unterschrift (SGM) des Codeblocks (BC) und
- Übertragung (E7) des Codeblocks auf den Prozessor (PR) zur Ausführung (E8) desselben nur bei Gleichheit der verglichenen Unterschriften
**dadurch gekennzeichnet, dass**:
- das Überprüfungsmittel der Integrität des Codeblocks (MVE) zwischen dem Hauptspeicher (MP) und dem Prozessor(PR) zwischengeschaltet ist;
- die Übertragungsstufen (E3), die Bestimmung der Unterschriften (SGD, SGM) (E5), der Vergleich der Unterschriften (E6) und die Übertragung (E7) durch das Überprüfungsmittel der Integrität des Codeblocks (MVE) durchgeführt werden.

2. Verfahren gemäß Anspruch 1, **dadurch gekennzeichnet, dass** es die folgenden Anfangsstufen umfasst:
- Unterzeichnen (I2) jedes Codeblocks durch eine Unterschrift (SGM) in Abhängigkeit von den in einem der ersten oder zweiten Speicherträger (DS, CP) im Verlauf eines Ladens (I3) des Codeblocks (BC) gelesenen geheimen Daten (KC oder AC) ab dem ersten Speicherträger (DS) im Speicher-Peripherie-Gerät (DD) und
- jede vorgespeicherte Unterschrift (SGM) dem jeweiligen Codeblock (BC) im Speicher-Peripherie-Gerät zuordnen (I3).

3. Verfahren gemäß Anspruch 1, **dadurch gekennzeichnet, dass** es die folgenden Anfangsstufen umfasst:
- außerhalb des Systems (PC) eine Unterschrift (SGM) jedes Codeblocks (BC) ausarbeiten und ihm den Codeblock zuordnen, um sie in einem ersten Speicher-Träger (DS) vorzuspeichern, der vom System abnehmbar ist und
- die Codeblöcke und die jeweiligen verbundenen Unterschriften ab dem ersten Speicher-Träger (DS) in das Speicher-Peripherie-Gerät (DD) zu laden.

4. Datenverarbeitungssystem (PC) vom Typ Computer oder Mikrocontroller mit einem Prozessor (PR), einem Hauptspeicher (MP) und einem Speicher-Peripherie-Gerät (DD), das eine Anwendung bildende Codeblöcke zwecks ihrer Ausführung vorspeichert, **dadurch gekennzeichnet**, das es Folgendes umfasst:
ein erstes Lademittel (DS, LEC) zum Laden der Codeblöcke (BC) der Anwendung (AP) ab einem ersten Speicher-Träger (DS) in das Speicher-Peripherie-Gerät (DD), um Unterschriften (SGM) jeweils in Verbindung mit den Codeblöcken (BC) in das Speicher-Peripherie-Gerät (DD) vorzuspeichern,
ein Überprüfungsmittel der Integrität des Codeblocks (MVE) und
ein zweites Lademittel (DS, LEC) zum Laden in einem zweiten Speicherträger (CP) gelesener geheimer Daten (KC oder AP) in das Überprüfungsmittel (MVE), **dadurch gekennzeichnet, dass** das genannte Überprüfungsmittel der Integrität des Codeblocks (MVE) zwischen dem Hauptspeicher (MP) und dem Prozessor (PR) zwischengeschaltet und zu Folgendem geeignet ist:
- Bestimmung einer Unterschrift (SGD) jedes ab dem Speicher-Peripherie-Gerät (DD, DS) in den Hauptspeicher (MP) übertragenen und im Hauptspeicher (MP) gelesenen Codeblocks (BC) in Abhängigkeit der geladenen geheimen Daten (KC oder AC) als Antwort auf einen Lesebefehl des Codeblocks durch den Prozessor (PR)"
- Vergleich der bestimmten Unterschrift mit einer jeweiligen, mit diesem im Speicher-Peripherie-Gerät vorgespeicherten und mit diesem in den Hauptspeicher (MP) übertragenen Unterschrift (SGM) des Codeblocks (BC) und
- Übertragung des genannten Codeblocks an den Prozessor (PR) zwecks Ausführung des Codeblocks im Prozessor (PR, SGD, SGM) nur bei Gleichheit der verglichenen Unterschriften.

5. System gemäß Anspruch 4, nach dem zu unterschiedlichen Anwendungen gehörende Codeblöcke (BC) jeweils in Abhängigkeit von unterschiedlichen Schlüsseln (KC) unterzeichnet werden.

6. System gemäß Anspruch 4 oder 5, nach dem zu unterschiedlichen Anwendungen gehörende Codeblöcke (BC) jeweils gemäß unterschiedlichen Unterschrifts-Bestimmungs-Algorithmen (AC) unterzeichnet werden.

7. System gemäß Anspruch 4 bis 6, mit einem Mittel (CRY) zum Unterzeichnen der Codeblöcke (BC) in Abhängigkeit der im ersten Speicher-Träger (DS) beim Laden der Anwendung (AP) gelesenen geheimen Daten (KC oder AC) zum Vorspeichern der Unterschriften (SGM) jeweils in Verbindung mit den Codeblöcken (BC) im Speicher-Peripherie-Gerät (DD) und in dem der zweite Speicherträger (CP) mit dem ersten Speicherträger (DS) zusammenfällt.

8. System gemäß Anspruch 4 bis 6, mit einem dritten Lademittel (CP, LEC) zum Laden der geheimen Daten (KC oder AP) ab einem dritten Speicher-Träger (CP) und einem Mittel (CRY) zum Unterzeichnen der Codeblöcke (BC) in Abhängigkeit von im dritten Speicher-Träger (CP) beim Laden der Anwendung (AP) gelesenen geheimen Daten (KC oder AC), um Unterschriften (SGM) jeweils in Verbindung mit den Codeblöcken (BC) im Speicher-Peripherie-Gerät (DD) vorzuspeichern.

9. System gemäß Anspruch 4 bis 6, in dem das erste Lademittel (DS, LEC) die Codeblöcke (BC) und die den Codeblöcken jeweils zugeordneten Unterschriften ab dem ersten Speicher-Träger (DS) zuordnet, um Unterschriften (SGM) jeweils in Verbindung mit den Codeblöcken (BC) in das Speicher-Peripherie-Gerät (DD) vorzuspeichern und in dem der zweite Speicher-Träger (CP) mit dem ersten Speicher-Träger (DS) zusammenfällt.

10. System gemäß Anspruch 8, in dem der zweite Speicher-Träger eine Chipkarte (CP) ist, die einen Schlüssel (KC) und / oder einen Unterschrifts-Bestimmungs-Algorithmus (AC) wenigstens der Anwendung (AP) als geheime Daten gespeichert hat.

11. System gemäß Anspruch 4 bis 10 mit einem mit dem Überprüfungsmittel der Integrität (MVE) verbundenen Cache-Speicher (CAV) zum Speichern der überprüften Codeblöcke (BC), um sie als Antwort auf Lesebefehle dieser Blöcke durch den Prozessor direkt an den Prozessor (PR) zu übertragen.

12. System gemäß Anspruch 4 bis 11, in dem das Überprüfungsmittel der Integrität (MVE) ein Controller-Modul (VE) umfasst.

13. System gemäß Anspruch 12, in dem das Controller-Modul (VE) des Überprüfungsmittels der Integrität (MVE) sich in Form eines Gehäuses mit integriertem Schaltkreis (BMVE) darstellt, das zwischen einer gedruckten Schaltung (CM) und einem den Prozessor (PR) oder den Hauptspeicher (MP) enthaltenden Gehäuse mit integriertem Schaltkreis (BPR, BMP) zwischengeschaltet ist.

14. System gemäß Anspruch 13, in dem das Controller-Modul (VE) des Überprüfungsmittels der Integrität (MVE) in einen den Prozessor (PR) oder den Hauptspeicher (MP) enthaltenden integrierten Schaltkreis integriert ist.

15. Speicherträger (DS) für das Datenverarbeitungssystem (PC) gemäß Anspruch 9, **dadurch gekennzeichnet, dass** es eine Anwendung (AP) und jeweils den Codeblöcken zugeordnete Unterschriften (SGM) bildende Codeblöcke (BC) unterstützt.
